# EUROPÄISCHE PATENTSCHRIFT

(11) **EP 0 344 833 B1**
(45) Veröffentlichungstag und Bekanntmachung des Hinweises auf die Patenterteilung: **04.08.1993**
(21) Anmeldenummer: 89201207.1
(22) Anmeldetag: 03.05.1989
(51) Int. Cl.: H04B 7/02

(54) **Empfangsverfahren und Empfangs-Antennensystem für mobilen Empfang**
Reception method and reception antenna system for mobile reception
Méthode de réception et système d'antenne réceptrice pour réception mobile

(30) Priorität: 03.05.1988 DE 3814900
(43) Veröffentlichungstag der Anmeldung: 06.12.1989
(73) Patentinhaber: Richard Hirschmann GmbH & Co., 73726 Esslingen (DE)
(72) Erfinder: Buck, Walter Dr.,, D-7000 Stuttgart 70 (DE); Schenkyr, Dieter, D-7312 Kirchheim (DE)
(74) Vertreter: Geyer, Ulrich F., Dr. Dipl.-Phys.

(56) Entgegenhaltungen:
- EP-A- 0 199 058
- EP-A- 0 263 357
- US-A- 4 079 318
- US-A- 4 092 596

## Beschreibung

Die Erfindung betrifft ein Empfangsverfahren für mobilen Empfang mit mehreren einzelnen Empfangsantennen, bei dem aus einzelnen Antennensignalen und/oder aus Linearkombinationen von Antennensignalen ein Summensignal gebildet und einer Empfangsschaltung bereitgestellt wird. Die Erfindung bezieht sich weiterhin auf ein Empfangs-Antennensystem für mobilen Empfang mit mehreren einzelnen Empfangsantennen, einer Antennensignale und/oder daraus gebildete Linearkombinationen addierenden Summierschaltung und einer Empfangsschaltung.

Bei mobilem Empfang, beispielsweise beim Empfang von Rundfunk- und/oder Fernsehsendungen in Kraftfahrzeugen, treten Empfangsstörungen auf, die den Empfang erheblich beeinträchtigen. Derartige Empfangsstörungen beruhen auf der Einstrahlung der Rundfunk- bzw. Fernsehwellen aus mehr als einer Richtung auf die Antenne. Dieser sogenannte Mehrwegeempfang tritt dadurch auf, daß die Rundfunk- bzw. Fernsehwellen nicht nur vom Sender direkt zur Antenne gelangen, sondern beispielsweise an Gebäuden reflektiert werden und auf anderen Wegen ebenfalls die Empfangsantenne erreichen. Die Empfangswege für die mehreren, von der Empfangsantenne aufgenommenen Signale sind unterschiedlich lang, so daß im Rundfunk- bzw. Fernsehsignal besonders bei frequenzmoduliertem Träger Interferenzstörungen auftreten, wodurch der resultierende Träger sowohl eine Amplitudenmodulation als auch eine Phasenmodulation erfährt. Daraus ergeben sich dann die lästigen und den Empfang erheblich beeinträchtigenden Empfangstörungen, die aufgrund der physikalischen Gegebenheiten unabhängig von der Antennenart, seien es Teleskopantennen, elektronische Kurzstabantennen oder elektronische Scheibenantennen, auftreten.

Aus der US-PS 4.079.318 ist ein Empfangs-Antennensystem für stationären Empfang, etwa für die Breitbandübertragung von Telefon-, Fernseh- und/oder Datensignalen im Multiplex-Betrieb bekannt. Dieses Antennensystem weist zwei Empfangsantennen auf, deren Ausgangssignale zu einem Summensignal addiert und einer Empfangsschaltung bereitgestellt werden. Eines der Antennensignale wird mit einer relativ niederen Frequenz phasenmoduliert, bevor es für die Summenbildung bereitgestellt wird. Durch Demodulation des einer Empfängerschaltung entnommenen Zwischenfrequenzsignals ergibt sich die Phasendifferenz zwischen dem Summensignal und dem phasenmodulierten Einzelsignal, so daß diese Phasendifferenz zur Regelung der Phasenlage des einen Antennensignals herangezogen wird, derart daß dieses Antennensignal in Phase mit dem Summensignal zu liegen kommt. Auf diese Weise können die Empfangseigenschaften des Diversity-Systems bei stationären Antennensystemen verbessert werden.

In der älteren, nicht vorveröffentlichten deutschen Patentanmeldung P 37 37 011, die denselben Anmelder hat wie die vorliegende Anmeldung und deren Inhalt zum Gegenstand dieser Anmeldung gemacht wird, ist ein Empfangsverfahren für mobilen Empfang, insbesondere für den Rundfunkempfang in Kraftfahrzeugen, vorgeschlagen worden, bei dem ebenfalls mehrere von einzelnen Empfangsantennen bereitgestellte Antennensignale oder Linearkombinationen von Antennensignalen zu einem Summensignal zusammengefaßt werden. Durch entsprechende Modulation nicht nur eines, sondern mehrerer Antennen- bzw. Linearkombinationssignale zeitlich nacheinander mittels einer hochfrequenten Hilfsmodulation und nachfolgender Demodulation des Summensignals sowohl nach Betrag als nach Frequenz bzw. Phase wird sowohl die Differenz des Amplitudenbetrags als auch der Phasenlage zwischen dem jeweiligen Einzelsignal und dem Summensignal festgestellt und in Abhängigkeit davon jeweils die Phase der einzelnen Antennen- bzw. Linearkombinationssignale derart geregelt, daß die Phasenlage der Einzelsignale zur Phasenlage des Summensignals ausgerichtet wird. Auf diese Weise ergibt sich ein verbessertes dynamisches Verhalten des Diversity-Antennensystems insbesondere im mobilen Betrieb.

Beide Verfahren weisen eine Summierschaltung auf, die Antennen- bzw. Linearkombinationssignale addiert. Addierer haben jedoch die Eigenschaft, daß dann, wenn an einem Eingang keine Spannung anliegt, d.h., wenn an einer Antenne keine Empfangsleistung auftritt, die Empfangsleistung der übrigen Antennen teilweise auf diesen Eingang reflektiert wird. Wenn beispielsweise bei n Antenneneingängen nur ein Signal an einem Eingang einer Summierschaltung mit im wesentlichen symmetrischem Aufbau anliegt, wird nur 1:n der Gesamtempfangsleistung auf den Ausgang der Summierschaltung geführt, dagegen (n-1):n der Gesamtempfangsleitung wieder auf die Eingänge reflektiert. Die der Empfangsschaltung bereitgestellte Empfangsleistung wird bei den herkömmlichen Empfangs-Antennensystemen daher klein, wenn an wenigstens einem der Antenneneingänge keine Eingangsleistung auftritt. Diese Reflexion der Leistung auf die Eingänge und damit die Verkleinerung des der Empfangsschaltung zugeführten Summensignals könnte dadurch vermieden werden, daß eine Antenne vom System vollständig abgeschaltet wird, wenn diese Antenne nichts oder nur wenig zur Gesamtleistung des Systems beiträgt. Da denn jedoch auch keine Information über dieses abgeschaltete Signal im System vorhanden ist, ist eine entsprechende Zuschaltung nicht mehr möglich, wenn an dieser Antenne wieder eine ausreichende Empfangsleistung auftritt.

Der Erfindung liegt daher die Aufgabe zugrunde, ein Empfangsverfahren und ein Empfangs-Antennensystem der eingangs angegebenen Art zu schaffen, bei dem die Empfangsleistung der Einzelantennen auch bei Ausfall einzelner Antennen für den Empfang optimal genutzt wird, wobei das System dennoch ständig über das Signal der ausgefallenen Antennen informiert ist.

Diese Aufgabe ist erfindungsgemäß durch ein Empfangsverfahren gelöst, bei dem den einzelnen Antennen- bzw. Linearkombinationssignalen jeweils ein Probensignal entnommen wird, das jeweilige entnommene Probensignal mittels einer Hilfsmodulation amplituden- und/oder phasenmoduliert und dem Summensignal zugefügt wird, das in der Empfangsschaltung verstärkte und selektierte, mit dem Probensignal beaufschlagte Summensignal demoduliert, daraus Betrag und/oder Phase des jeweiligen Einzelsignals bezüglich des Summensignals ermittelt, und das jeweilige Antennen- bzw. Linearkombinationssignal in Abhängigkeit des ermittelten Betrags und/oder der ermittelten Phase beeinflußt wird. Auf Grund des erfindungsgemäßen Merkmals, daß nicht das Antennen- bzw. Linearkombinationssignal selbst moduliert, sondern ein Probensignal entnommen und dieses moduliert und wie beschrieben ausgewertet wird, ist auch dann immer eine Information über die eingehenden Antennen- bzw. Linearkombinationssignale im Empfangssystem vorhanden, wenn ein einzelnes Antennen- bzw. Linearkombinationssignal zum Summensignal nichts beiträgt oder vom Antennensystem zeitweilig vollständig abgeschaltet ist. Durch die Verarbeitung eines den einzelnen Antennen- bzw. Linearkombinationssignalen entnommen Probensignals ist also eine wesentlich umfangreichere und wirkungsvollere Steuerung und Regelung des Empfangssystems möglich, ohne daß auf kontinuierlich vorhandene Information über die einzelnen Signale verzichtet werden müßte.

Gemäß einer bevorzugten Ausführungsform der Erfindung wird das jeweilige Antennen- bzw. Linearkombinationssignal in Abhängigkeit von der Bewertung des Probensignals bezüglich des Summensignals phasenmäßig und/oder amplitudenmäßig derart geändert, daß es einen optimalen Beitrag zum Summensignal liefert. Es ergeben sich daher große Freiheitsgrade in der Steuerung und Regelung des jeweiligen Antennen- bzw. Linearkombinationssignals im Hinblick auf eine Optimierung des Summensignals. Beispielsweise kann das jeweilige Antennen- bzw. Linearkombinationssignal in seiner Phase kontinuierlich oder auch diskontinuierlich, etwa in Schritten von 30, 45 oder 90^{o} bezüglich der Phase des Summensignals geändert werden.

Gemäß einer besonders vorteilhaften Ausgestaltung der Erfindung wird das jeweilige Antennen- bzw. Linearkombinationssignal abgeschaltet, wenn dessen Leistung unter einen vorgegebenen Schwellwert absinkt. Der besondere Vorteil dieser Ausführungsform liegt darin, daß - wie bereits erwähnt - ein Eingang der Summierschaltung unwirksam gemacht wird, so daß auf diesen Eingang keine Leistungs-Reflexion möglich ist. Die Empfangsleistung der übrigen Antennen- bzw. Linearkombinationssignale wird dadurch optimal ausgenutzt. Darüberhinaus ist dadurch auch gewährleistet, daß Rauschanteile des eine geringe Leistung aufweisenden Antennen- bzw. Linearkombinationssignals im Gegensatz zu einer Abregelung desselben keinen Beitrag zum Gesamtrauschen liefern.

Selbstverständlich ist es auch möglich, mehrere Antennen- bzw. Linearkombinationssignale abzuschalten, wenn deren Leistungen unter einen vorgegebenen Schwellwert absinken. Durch die erfindungsgemäße Entnahme eines Probensignals aus den jeweiligen Antennen- bzw. Linearkombinationssignalen ist in diesen Fällen jedoch gewährleistet, daß kontinuierlich Information über diese Signale dem Empfangssystem vorliegt, so daß die abgeschalteten Antennen- bzw. Linearkombinationssignale sofort wieder angeschaltet werden können, wenn ihre Leistungen den vorgegebenen Schwellwert übersteigen.

Besonders vorteilhaft ist es dabei, wenn das jeweilige entnommene Probensignal einer trägerlosen Modulation, vorzugsweise einer Zweiseitenband-Modulation unterzogen wird. Diese Ausgestaltung der Erfindung hat den Vorteil, daß kein Bezug zu einem Träger gegeben und ein Bezug dadurch nur zum Summensignal vorhanden ist. Deshalb ist es gemäß einer weiteren Ausführungsform möglich, das einer trägerlosen Modulation unterzogene Probensignal dem Sumensignal sowohl ohne Phasendrehung als auch mit einer Phasendrehung von 90^{o} zuzuführen. Dies bedeutet, daß lediglich durch eine Phasendrehung von 90^{o} von Amplitudenmodulation auf Phasenmodulation umgeschaltet und dadurch die Funktion von Amplituden-und Phasenmodulation vertauscht ist. Der Amplituden- oder Phasen-Demodulator kann dann allein in zeitlicher Folge sowohl Real- als auch Imaginärteil des Probensignals in Bezug auf das Summensignal und damit Betrag und Phase des einzelnen Antennen- bzw. Linearkombinationssignals ermitteln. Dadurch kann der Schaltungsaufwand für den Demodulator halbiert werden.

Vorteilhaft ist es dabei, daß die einzelnen Probensignale zeitlich nacheinander wiederholt abgegriffen werden. Während einer Wiederholperiode, deren Länge je nach den vorliegenden Gegebenheiten und der gewünschten Umschaltschnelligkeit gewählt werden kann, werden also alle einzelnen Antennen- bzw. Linearkombinationssignale jeweils einmal dahingehend ausgewertet, wie hoch der Anteil oder die Leistung im Verhältnis zum Summensignal ist. Dementsprechend ist dann eine Steuerung oder Regelung der einzelnen Antennen- bzw. Linearkombinationssignale pro Wiederholperiode möglich.

Eine weitere vorteilhafte Ausgestaltung der Erfindung besteht darin, daß den Summensignal vor Zuführung der phasen- und/oder amplitudenmodulierten Probensignale und vor der Empfangsschaltung ein Probensummensignal abgegriffen wird. Vorzugsweise wird der Abgriff des Probensummensignals ebenfalls pro Abgriffperiode für die Probensignale der einzelnen Antennen- bzw. Linearkombinationssignale vorgenommen. Auf diese Weise ist es möglich, eine Eichung vorzunehmen. Vom Demodulator wird einem elektronischen Speicher, beispielsweise in einem Prozessor, der ermittelte Phasenwinkel und/oder die ermittelte Amplitude eingespeichert, so daß dann darauf beim Auswerten der Probensignale Bezug genommen werden kann. Das bedeutet, daß temperatur- oder alterungsbedingte Änderungen sowie systematische Abweichungen ermittelt bzw. korrigiert werden können. Dadurch werden aufwendige Abgleichvorgänge in der Fertigung eingespart, und das Langzeitverhalten der Schaltung kann auch bei Verwendung weniger stabiler Bauteile und -elemente verbessert werden.

Gemäß einer weiteren Ausgestaltung der Erfindung wird der Zeitpunkt und/oder die Abfolge der Entnahme der jeweiligen Probensignale und/oder des Probensummensignals und/oder die Phasenumschaltung des jeweiligen einer Modulation unterzogenen Probensignals mit einem Prozessor gesteuert. Das Eingangssignal des Prozessors ist dabei das Ausgangssignal des Demodulators, welches in einem Analog-Digital-Wandler in ein digitales Signal umgesetzt wird.

Insbesondere derselbe Prozessor kann weiterhin vorzugsweise für die Bewertung des Probensignals hinsichtlich der Bedeutung bezüglich des Summensignals aber auch für die phasen- und/oder amplitudenmäßige Änderung des jeweiligen Probensignals in Abhängigkeit von der Bewertung des Probensignals und/oder für die Abschaltung des jeweiligen Antennen- bzw. Linearkombinationssignals eingesetzt werden.

Die gestellte Aufgabe wird auch mit einem Empfangs-Antennensystem der eingangs genannten Art erfindungsgemäß gelöst durch jeweils eine Probensignal-Entnahmeschaltung, einen das entnommene Probensignal mit einem Hilfsmodulationssignal modulierenden Modulator, einen Demodulator, der ein mit dem modulierten Probensignal beaufschlagtes Summensignal, das in der Empfangsschaltung verstärkt und selektiert wurde, demoduliert, und eine Steuerschaltung, die das jeweilige Antennen- bzw. Linearkombinationssignal in Abhängigkeit des ermittelten Betrags und/oder der ermittelten Phase beeinflußt. Durch die Probensignalentnahme ist also jederzeit kontinuierlich Information über die einzelnen Antennen- bzw. Linearkombinationssignale vorhanden, auch dann, wenn einzelne Antennenbzw. Linearkombinationssignale vollständig vom Antennensystem abgeschaltet sind. Auf diese Weise ist der Freiheitsgrad für die Steuerung und Regelung des Gesamtantennensystems erweitert.

Gemäß einer vorteilhaften Ausgestaltung der Erfindung ist jeweils ein Schalter vorgesehen, der das jeweilige Antennen- bzw. Linearkombinationssignal nach der Probensignal-Entnahmeschaltung vom Empfangsantennensystem abschaltet, wenn die Steuerschaltung ein Signal an den Schalter abgibt. Wie bereits erwähnt, ist es mit der vorliegenden Schaltungsanordnung für ein Empfangs-Antennensystem also möglich, ohne auf eine kontinuierliche Signalüberwachung verzichten zu müssen, einzelne Antennen- bzw. Linearkombinationssignale vollständig abzuschalten, so daß auf diese Eingänge keine Reflexion möglich ist. Auf diese Weise werden die Empfangsleistungen der übrigen Antennen- bzw. Linearkombinationssignale für die Weiterverarbeitung optimal ausgenutzt.

Eine weitere Ausgestaltung der Erfindung zeichnet sich dadurch aus, daß die Steurschaltung mit jeweils einem Phasendrehglied für das jeweilige Antennen- bzw. Linearkombinationssignal verbunden ist. Je nach den Auswerteergebnissen des Probensignals nach der Demodulation wird das jeweilige Antennen- bzw. Linearkombinationssignal durch das zugehörige Phasendrehglied phasenmäßig in Richtung des Summensignals gedreht.

Vorteilhafterweise prägt der Modulator dem Probensignal eine trägerlose Modulation auf, so daß, wie bereits beschreiben, eine Umschaltung von Amplituden- auf Phasenmodulation lediglich durch eine Phasedrehung von 90^{o} bewirkt werden kann. Als Modulator ist ein Zweiseitenband-Modulator (z.B. ein Ringmodulator) vorteilhaft. Durch die Phasenumschaltung von 90^{o} ist es möglich, mit nur einem einzigen Demodulator, der wahlweise auf Amplituden- oder Phasendemodulation empfindlich sein kann, und mit der doppelten Anzahl von Meßschritten sowohl den Real- als auch den Imaginärteil und damit Betrag und Phase des Probensignals zu ermitteln. Dadurch wird der Schaltungsaufwand wesentlich verringert. Darüber hinaus kann der Frequenzdemodulator der Empfangsschaltung auch zur Demodulation der aufgeprägten Hilfsmodulation eingesetzt werden, weil die Amplitudeninformation im 90^{o}-phasenverschobenen Zyklus als Phaseninformation vorliegt und damit das Signal nach der Begrenzerstufe der Empfangsschaltung abgegeriffen werden kann.

Vorzugsweise sind die Probensignal-Entnahmeschaltungen mit einem Umschalter (Probensignal-Umschalter) verbunden, so daß dieser zeitlich nacheinander die einzelnen Ausgangssignale der Probensignal-Entnahmeschaltung wiederholt der Modulation unterwirft. Das Steuersignal des Probensignal-Umschalters wird vorzugsweise von der Steuerschaltung erzeugt und kann je nach den Gegebenheiten für eine weniger häufige oder häufige Abfrage und Auswertung von der Steuerschaltung geändert werden.

Insbesondere im Zusammenhang mit einem Modulator für trägerlose Modulation ist es vorteilhaft, wenn der Ausgang desselben mittels eines Alternativ-Umschalters entweder direkt oder über einen 90^{o}- Phasenschieber mit der Ausgangsleitung der Summierschaltung verbunden ist. Die Frequenz der Umschaltung des Alternativ-Umschalters ist doppelt so hoch wie die Frequenz, mit der von einem Probensignal auf ein anderes Probensignal umgeschaltet wird. Oder anders ausgedrückt, die Schaltfrequenz des Alternativ-Umschalters ist doppelt so groß wie diejenige des Probensignal-Umschalters.

Eine vorteilhafte Weiterbildung der Erfindung besteht darin, daß der Ausgang der Summierschaltung mit einem Anschluß des Probensignal-Umschalters verbunden ist. Auf diese Weise ist eine Eichung möglich, wie dies zuvor bereits erläutert wurde.

Vorteilhafterweise ist die Steuerschaltung ein Mikroprozessor oder umfaßt einen solchen.

Die Erfindung wird nachstehend anhand einer schematischen Darstellung eines Ausführungsbeispiels näher erläutert.

Die Antennenausfangssignale der Einzelantennen 1-1, 1-2, ..., 1-n gelangen an eine Matrixschaltung 2, an deren Ausgängen jeweils Linearkombinationen der Antennenausgangssignale bereitgestellt werden. Derartige Matrixschaltungen sind allgemein bekannt und beispielsweise in der EP-A2 02 01 977 beschrieben, so daß hierauf im vorliegenden Fall nicht eingegangen zu werden braucht. Die Ausgänge der Matrixschaltung 2 sind jeweils mit einem Eingang eines Phasendrehglieds 3-1, 3-2, ..., 3-n verbunden. Den Phasendrehgliedern 3-1, 3-2, ..., 3-n wird, wie nachfolgend näher erläutert werden wird, jeweils eine die Phasendrehung steuerndes Signal über eine BUS-Leitung 4 zugeleitet. Die Ausgänge der Phasendrehglieder 3-1, 3-2, ..., 3-n sind mit Probensignal-Entnahmeschaltungen 5-1, 5-2, ..., 5-n verbunden, in denen jeweils über Koppelimpedanzen 6-1, 6-2, ..., 6-n Signalproben entnommen werden, die an Anschlüssen eines Probensignal-Umschalters 7 liegen. Die Ausgangssignale der Phasendrehglieder 3-1, 3-2, ..., 3-n gelangen über die jeweiligen Probensignal-Entnahmeschaltungen 5-1, 5-2, ..., 5-n an Schalter 8-1, 8-2, ..., 8-n, die über eine BUS-Leitung 9 geschaltet werden und das jeweilige Antennen- bzw. Linearkombinationssignal entweder an eine Summierschaltung 10 durchschalten oder über entsprechende Impedanzen 11-1, 11-2, ..., 11-n abschließen. Der Ausgang des Probensignal-Umschalters (Demultiplexer) 7 ist mit einem Modulator 12 für trägerlose Modulation, nämlich einem Zweiseitenband-Modulator verbunden, in dem das Probensignal, welches vom Probensignal-Umschalter 7 durchgeschaltet ist, eine Modulation aufgeprägt erhält, wobei dem Modulator 12 eine Hilfsfrequenz f_{H} von einem Hilfsfrequenzgenerator 13 zugeleitet wird. Das Ausgangssignal des Modulators 12 wird zwei Schalteranschlüssen eines Alternativ-Schalters 14 einmal direkt und zum anderen über ein 90^{o}-Phasendrehglied 15 zugeleitet. Der Alternativ-Schalter 14 schaltet das Ausgangssignal des Modulators 12 direkt oder über das 90^{o}-Phasendrehglied 15 an die Ausgangsleitung der Summierschaltung 10, die mit einer Empfangsschaltung 16 eines Rundfunkempfängers verbunden ist. Zwischen dem Ausgang des Alternativ-Schalters 14 und dem Ausgang der Summierschaltung 10 ist eine Koppelimpedanz 17 vorgesehen. Der Empfangsschaltung 16 wird das Stereo-Multiplexsignal direkt hinter dem FM-Demodulator entnommen und einem Hilfsfrequenzfilter 17 zugeleitet, in dem die Hilfsfrequenz-Komponente ausgesiebt wird. Ein dem Hilfsfrequenzfilter 17 nachgeschalteter Synchron-Demodulator 18 dient der besseren Selektion, der Abtrennung unerwünschter Konversionsprodukte, die in der Empfangsschaltung 16 entstehen können, sowie der Vorzeichenbestimmung. Dem Synchron-Demodulator 18 wird ebenfals das vom Hilfsfrequenzgenerator 13 erzeugte Hilfsfrequenzsignal zugeleitet. Das Ausgangssignal des Synchron Demodulators 18 gelangt über einen Analog-/Digital-Wandler 19 als digitales Signal zu einem Prozessor 20. Der Prozessor 20 steuert über Leitungen 21 bzw. 22 den Probensignal-Umschalter 7 und den Alternativ-Schalter 14 sowie über die BUS-Leitung 9 die Schalter 8-1, 8-2, ..., 8-n. Die BUS-Leitung 4 zur Steuerung der Phasendrehglieder 3-1, 3-2, ..., 3-n ist ebenfalls mit dem Prozesor 20 verbunden.

Das Ausgangssignal des Synchron-Demodulators 18 enthält in zeitlicher Folge Informationen über Betrag und Phase der jeweiligen über die Probensignal-Entnahmeschaltungen 5-1, 5-2, ..., 5-n abgegriffenen Probensignale und damit über die einzelnen Antennen- bzw. Linearkombinationssignale. Im Prozessor 20 wird daraus, sowie aus der Stellung des vom Prozessor gesteuerten Probensignal-Umschalters 7 und des ebenfalls vom Prozessor 20 gesteuerten Alternativ-Schalters 14 Betrag und Phase der einzelnen Antennensignale ermittelt. In Abhängigkeit davon werden über die BUS-Leitung 4 die jeweiligen Phasendrehglieder 3-1, 3-2, ..., 3-n so eingestellt, daß in der Summierschaltung 10 Leistungsaddition auftritt. Wenn der Prozessor feststellt, daß die Signalleistung eines bestimmten Antennensignals bzw. einer bestimmten Linearkombination von Antennensignalen unter einen vorgegebenen Schwellwert absinkt, schaltet der Prozessor über die BUS-Leitung 9 dieses Antennen- bzw. Linearkombinationssignal mittels der Schalter 8-1, 8-2, ..., 8-n ab, so daß eine Leistungsreflexion auf diesen Eingangszweig vermieden und dadurch eine Verringerung der Gesamtleistung des Summensignals verhindert wird.

Eine weitere vorteilhaft Ergänzung der erfindungsgemäßen Schaltung ist durch die Verbindung des Ausgangs der Summierschaltung 10 mit einem Anschluß des Probensignal-Umschalters 7 gegeben. Auf diese Weise wird das eigentliche Summensignal jeweils pro Abfragezyklus ebenfalls abgefragt, so daß eine Eichung möglich ist. Im Speicher des Prozessors 20 wird der im Ausgangssignal des Synchron-Demodulators 18 enthaltene Phasenwinkel und/oder die im Ausgangssignal enthaltene Amplitude gespeichert, wovon dann bei Abgreifen der einzelnen Antennen- bzw. Linearkombinationssignale ausgegangen werden kann.

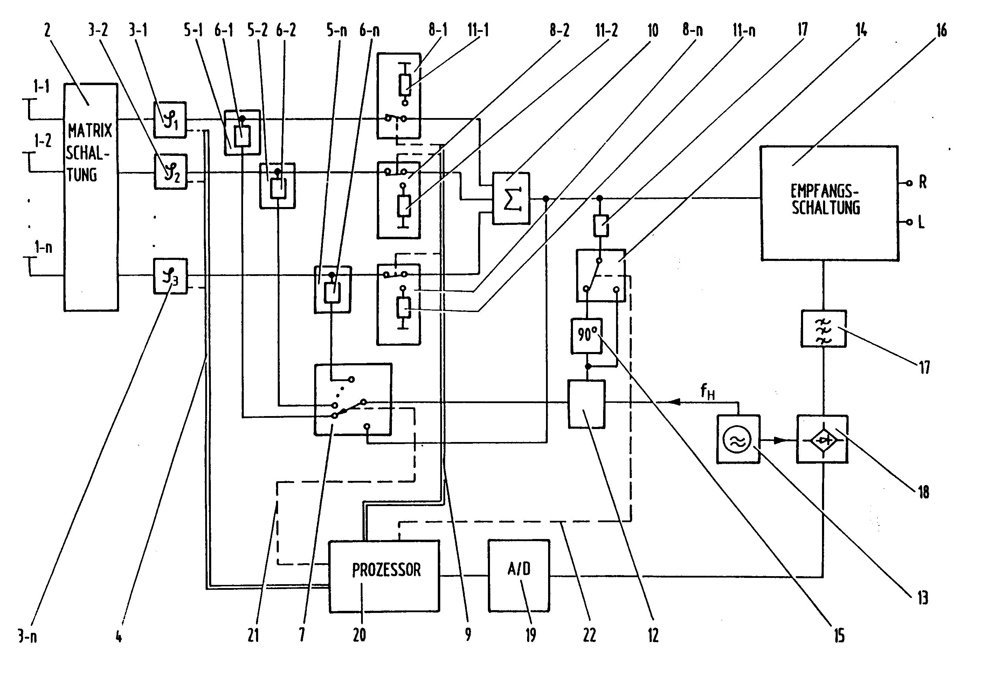

## Patentansprüche

1. Empfangsverfahren für mobilen Empfang mit mehreren einzelnen Empfangsantennen, bei dem aus einzelnen Antennensignalen und/oder aus Linearkombinationen von Antennensignalen ein Summensignal gebildet und einer Empfangsschaltung bereitgestellt wird,
dadurch gekennzeichnet, daß
- den einzelnen Antennen- bzw. Linearkombinationssignalen jeweils ein Probensignal entnommen wird,
- das jeweilige entnommene Probensignal mittels einer Hilfsmodulation amlituden- und/oder phasenmoduliert und dem Summensignal zugefügt wird,
- das in der Empfangsschaltung verstärkte und selektierte, mit dem Probensignal beaufschlagte Summensignal demoduliert, daraus Betrag und/oder Phase des jeweiligen Einzelsignals bezüglich des Summensignals ermittelt, und das jeweilige Antennen- bzw. Linearkombinationssignal in Abhängigkeit des ermittelten Betrags und/oder der ermittelten Phase beeinflußt wird.

2. Empfangsverfahren nach Anspruch 1, dadurch gekennzeichnet, daß das jeweilige Antennen- bzw. Linearkombinationssignal in Abhängigkeit von der Bewertung des Probensignals bezüglich des Summensignals phasenmäßig und/oder amplitudenmäßig derart geändert wird, daß es einen optimalen Beitrag zum Summensignal liefert.

3. Empfangsverfahren nach Anspruch 1 oder 2, dadurch gekennzeichnet, daß das jeweilige Antennen- bzw. Linearkombinationssignal abgeschaltet wird, wenn dessen Leistung unter einen vorgegebenen Schwellwert absinkt.

4. Empfangsverfahren nach einem der Ansprüche 1 bis 3, dadurch gekennzeichnet, daß das jeweilige entnommene Probensignal einer trägerlosen Modulation unterzogen wird.

5. Empfangsverfahren nach Anspruch 4, dadurch gekennzeichnet, daß das jeweilig entnommene Probensignal einer Zweiseitenband-Modulation unterzogen wird.

6. Empfangsverfahren nach Anspruch 4 oder 5, dadurch gekennzeichnet, daß das einer trägerlosen Modulation unterzogene Probensignal dem Summensignal sowohl ohne Phasendrehung als auch mit einer Phasendrehung von 90^{o} zugeführt wird.

7. Empfangsverfahren nach einem der Ansprüche 1 bis 6, dadurch gekennzeichnet, daß die einzelnen Probensignale zeitlich nacheinander wiederholt abgegriffen werden.

8. Empfangsverfahren nach einem der Ansprüche 1 bis 7, dadurch gekennzeichnet, daß dem Summensignal vor Zuführung der phasen- und/oder amplitudenmodulierten Probensignale und vor dem Empfangsschaltung ein Probensummensignal abgegriffen wird.

9. Empfangsverfahren nach einem der Ansprüche 1 bis 8, dadurch gekennzeichnet, daß der Zeitpunkt und/oder die Abfolge der Entnahme der jeweiligen Probensignale und/oder des Probensummensignals und/oder die Phasenumschaltung des jeweiligen einer Modulation unterzogenen Probensignals mit einem Prozessor gesteuert wird.

10. Empfangsverfahren nach einem der Ansprüche 1 bis 9, dadurch gekennzeichnet, daß die Bewertung des Probensignals hinsichtlich der Bedeutung für das Summensignal von einem Prozessor vorgenommen wird.

11. Empfangsverfahren nach einem der Ansprüche 1 bis 10, dadurch gekennzeichnet, daß die phasen- und/oder amplitudenmäßige Änderung des jeweiligen Probensignals in Abhängigkeit von der Bewertung des Probensignals gesteuert und/oder die Abschaltung des jeweiligen Antennen-bzw. Linearkombinationssignals vorgenommen wird, wenn dessen Leistung unter einen vorgegebenen Schwellwert absinkt.

12. Empfangs-Antennensystem für mobilen Empfang mit mehreren einzelnen Empfangsantennen, einer Antennensignale und/oder daraus gebildete Linearkombinationen addierenden Summierschaltung und einer Empfangsschaltung,
gekennzeichnet durch
- jeweils eine Probensignal-Entnahmeschaltung (5-1, 5-2, ..., 5-n),
- einen das entnommene Probensignal mit einem Hilfsmodulationssignal modulierenden Modulator (12),
- einen Demodulator (18), der ein mit dem jeweiligen modulierten Probensignal beaufschlagtes Summensignal, das in der Empfangsschaltung (16) verstärkt und selektiert wurde, demoduliert, und
- eine Steuerschaltung (20), die das jeweilige Antennen- bzw. Linearkombinationssignal in Abhängigkeit des ermittelten Betrags und/oder der ermittelten Phase beeinflußt.

13. Empfangs-Antennensystem nach Anspruch 12, dadurch gekennzeichnet, daß jeweils ein Schalter (8-1, 8-2, ..., 8-n) vorgesehen ist, der das jeweilige Antennen- bzw. Linearkombinationssignal nach der Probensignal-Entnahmeschaltung (5-1, 5-2, ..., 5-n) von Empfangs-Antennensystem abschaltet, wenn die Steuerschaltung (20) ein Signal an den Schalter (8-1, 8-2, ..., 8-n) abgibt.

14. Empfangs-Antennensystem nach Anspruch 12 oder 13, dadurch gekennzeichnet, daß die Steuerschaltung (20) mit jeweils einem Phasendrehglied (3-1, 3-1, ..., 3-n) für das jeweilige Antennen- bzw. Linearkombinationssignal verbunden ist.

15. Empfangs-Antennensystem nach einem der Ansprüche 12 bis 14, dadurch gekennzeichnet, daß der Modulator (12) dem Probensignal eine trägerlose Modulation aufprägt.

16. Empfangs-Antennensystem nach Anspruch 15, dadurch gekennzeichnet, daß der Modulator (12) ein Zweiseitenband-Modulator ist.

17. Empfangs-Antennensystem nach einem der Ansprüche 12 bis 16, dadurch gekennzeichnet, daß die jeweiligen Probensignal-Entnahmeschaltungen (5-1, 5-2, ..., 5-n) mit einem Umschalter (Probensignal-Umschalter) (7) verbunden ist.

18. Empfangs-Antennensystem nach einem der Ansprüche 12 bis 17, dadurch gekennzeichnet, daß das Steuersignal des Probensignal-Umschalters (7) von der Steuerschaltung (20) erzeugt ist.

19. Empfangs-Antennensystem nach einem der Ansprüche 12 bis 18, dadurch gekennzeichnet, daß der Ausgang des Modulators (12) mittels eines Alternativ-Umschalters (14) abwechselnd direkt oder über eine 90^{o}-Phasenschieber (15) mit der Ausgangsleitung der Summierschaltung (10) verbunden ist.

20. Empfangs-Antennensystem nach einem der Ansprüche 12 bis 19, dadurch gekennzeichnet, daß der Ausgang der Summierschaltung (10) mit einem Anschluß des Probensignal-Umschalters (7) verbunden ist.

21. Empfangs-Antennensystem nach einer der Ansprüche 12 bis 20, dadurch gekennzeichnet, daß die Steuerschaltung (20) einen Mikroprozessor umfaßt.

## Claims

1. Receiving method for mobile reception having a plurality of individual receiving antennas in which from individual antenna signals and/or linear combinations of antenna signals a composite signal is formed and made available to a receiving circuit,
characterized in that
- a sample signal is extracted from the individual antenna or linear combination signals,
- the particular extracted sample signal amplitude and/or phase-modulated by means of an auxiliary modulation and added to the composite signal,
- the composite signal amplified and selected in the receiving circuit and influenced by the sample signal demodulated, therefrom the magnitude and/or phase of the respective individual signal with respect to the composite signal determined and the respective antenna or linear combination signal is influenced in dependence on the determined magnitude and/or the determined phase.

2. Receiving method according to claim 1, characterized in that the respective antenna or linear combination signal is continuously modified in phase and/or amplitude in dependence upon the evaluation of the sample signal with respect to the composite signal in such a manner that said signal furnishes an optimum contribution to the composite signal.

3. Receiving method according to claim 1 or 2, characterized in that the respective antenna or linear combination signal is disconnected when the power thereof drops below a predetermined threshold value.

4. Receiving method according to any one of claims 1 to 3, characterized in that the respective sample signal taken is subjected to a carrierless modulation.

5. Receiving method according to claim 4, characterized in that the respective sample signal taken is subjected to a double-sideband modulation.

6. Receiving method according to claim 4 or 5, characterized in that the sample signal subjected to a carrierless modulation is supplied to the composite signal both without phase rotation and with a phase rotation of 90°.

7. Receiving method according to any one of claims 1 to 6, characterized in that the individual sample signals are tapped off repeatedly in time succession.

8. Receiving method according to any one of claims 1 to 7, characterized in that a sample composite signal is taken from the composite signal before supply of the phase and/or amplitude-modulated sample signals and before the receiving circuit.

9. Receiving method according to any one of claims 1 to 8, characterized in that the instant and/or the sequence of taking the respective sample signals and/or the sample composite signal and/or the phase switchover of the particular sample signal subjected to a modulation is controlled with a processor.

10. Receiving method according to any one of claims 1 to 9, characterized in that the evaluation of the sample signal with regard to the significance for the composite signal is carried out by a processor.

11. Receiving method according to any one of claims 1 to 10, characterized in that the phase and/or amplitude change of the respective sample signal is controlled in dependence upon the evaluation of the sample signal and/or the disconnection of the respective antenna or linear combination signal is effected when the power thereof drops below a predetermined threshold value.

12. Receiving antenna system for mobile reception comprising a plurality of individual receiving antennas, a summation circuit adding antenna signals and/or linear combinations formed therefrom and a receiving circuit,
characterized by
- a respective sample signal taking circuit (5-1, 5-2, ..., 5-n),
- a modulator (12) modulating the sample signal taken with an auxiliary modulation signal,
- a demodulator (18) which demodulates a composite signal which is influenced by the modulated sample signal and which has been amplified and selected in the receiving circuit (16), and
- a control circuit (20) which influences the respective antenna and linear combination signal in dependence upon the determined magnitude and/or the determined phase.

13. Receiving antenna system according to claim 12, characterized in that in each case a switch (8-1, 8-2, ..., 8-n) is provided which disconnects the respective antenna or linear combination signal from the receiving antenna system after the sample signal taking circuit (5-1, 5-2, ..., 5-n) when the control circuit (20) furnishes a signal to the switch (8-1, 8-2 ..., 8-n).

14. Receiving antenna system according to claim 12 or 13, characterized in that the control circuit (20) is connected to a respective phase rotation member (3-1, 3-2, ..., 3-n) for the respective antenna or linear combination signal.

15. Receiving antenna system according to any one of claims 12 to 14, characterized in that the modulator (12) impresses a carrierless modulation on the sample signal.

16. Receiving antenna system according to claim 15, characterized in that the modulator (12) is a double-sideband modulator.

17. Receiving antenna system according to any one of claims 12 to 16, characterized in that the respective sample signal taking circuits (5-1, 5-2, ..., 5-n) are connected to a changeover switch (sample signal changeover switch) (7).

18. Receiving antenna system according to any one of claims 12 to 17, characterized in that the control signal of the sample signal changeover switch (7) is generated by the control circuit (20).

19. Receiving antenna system according to any one of claims 12 to 18, characterized in that the output of the modulator (12) is connected by means of an alternative changeover switch (18) alternately directly or via a 90° phase shifter (15) to the output line of the summation circuit (10).

20. Receiving antenna system according to any one of claims 12 to 19, characterized in that the output of the summation circuit (10) is connected to a terminal of the sample signal changeover switch (7).

21. Receiving antenna system according to any one of claims 12 to 20, characterized in that the control circuit (20) includes a microprocessor.

## Revendications

1. Procédé de réception pour réception mobile à l'aide de plusieurs antennes de réception individuelles, dans lequel est formé un signal de somme, à partir de signaux d'antennes individuelles et/ou de combinaisons linéaires de signaux d'antennes et dans lequel est constitué un circuit de réception,
caractérisé en ce qu'
- un signal échantillon est chaque fois prélevé sur les signaux d'antennes individuelles ou les signaux de combinaisons linéaires,
- le signal échantillon chaque fois prélevé est modulé en amplitude et/ou en phase, à l'aide d'une modulation auxiliaire et ajouté au signal de somme,
- en ce que le signal de somme amplifié dans le circuit de réception est sélectionné, corrigé par le signal échantillon, est démodulé, l'amplitude et/ou la phase résultante du signal individuel spécifique par rapport au signal de somme étant déterminée à partir de là, et le signal d'antenne respectif, ou le signal de combinaison linéaire étant corrigés en fonction de l'amplitude déterminée et/ou de la phase déterminée.

2. Procédé de réception selon la revendication 1, caractérisé en ce que le signal d'antenne respectif ou de combinaison linéaire est modifié en fonction de l'évaluation quantitative du signal échantillon par rapport au signal de somme, la modification s'effectuant en phase et/ou en amplitude de telle façon qu'il offre une contribution optimale au signal de somme.

3. Procédé de réception selon la revendication 1 ou 2, caractérisé en ce que le signal d'antenne respectif, ou le signal de combinaison linéaire est mis hors circuit lorsque sa puissance descend au dessous d'une valeur de seuil déterminée.

4. Procédé de réception selon l'une des revendications 1 à 3, caractérisé en ce que le signal échantillon chaque fois prélevé est soumis à une modulation sans porteuse.

5. Procédé de réception selon la revendication 4, caractérisé en ce que le signal échantillon chaque fois prélevé est soumis à une modulation à deux bandes latérales.

6. Procédé de réception selon la revendication 4 ou 5, caractérisé en ce qu'un signal échantillon soumis à une modulation sans porteuse est amené au signal de somme, tant sans rotation de phase qu'également avec une rotation de phase de 90°.

7. Procédé de réception selon l'une des revendications 1 à 6, caractérisé en ce que les signaux échantillons individuels sont prélevés successivement de façon répétitive les uns après les autres.

8. Procédé de réception selon l'une des revendications 1 à 7, caractérisé en ce qu'un signal de somme échantillon est prélevé du signal de somme, avant amenée des signaux échantillons modulés en phase et/ou en amplitude et avant la commutation en réception.

9. Procédé de réception selon l'une des revendications 1 à 8, caractérisé en ce que le moment et/ou l'ordre de succession du prélèvement des signaux échantillons respectifs et/ou du signal de somme d'échantillon respectif et/ou de la commutation en phase du signal échantillon chaque fois soumis à une modulation est commandé à l'aide d'un processeur.

10. Procédé de réception selon l'une des revendications 1 à 9, caractérisé en ce que l'évaluation quantitative du signal échantillon par rapport à l'importance pour un signal de somme est effectuée par un processeur.

11. Procédé de réception selon l'une des revendications 1 à 10, caractérisé en ce que la modification en phase et/ou en amplitude du signal échantillon respectif est commandée en fonction de l'évaluation quantitative du signal échantillon, et/ou la mise hors circuit du signal d'antenne respectif, ou du signal de combinaison linéaire est effectuée lorsque cette puissance descend en dessous d'une valeur de seuil prédéterminée.

12. Système d'antenne de réception pour réception mobile à l'aide de plusieurs antennes réceptrices individuelles, avec un circuit sommateur opérant l'addition des signaux d'antennes et/ou des combinaisons linéaires en résultant et un circuit récepteur, caractérisé par
- chaque fois un circuit de prélèvement de signal échantillon (5-1, 5-2, 5..., 5-n), un modulateur (12) opérant la modulation du signal échantillon prélevé à l'aide d'un signal de modulation auxiliaire
- un démodulateur (18) opérant la démodulation d'un signal de somme influencé à l'aide du signal échantillon spécifique modulé et ayant été amplifié dans le circuit récepteur (16) et sélectionné, et
- un circuit de commande (20) agissant sur le signal d'antenne respectif, ou le signal de combinaison linéaire en fonction de la valeur déterminée et/ou de la phase déterminée.

13. Système d'antenne de réception selon la revendication 12, caractérisé en ce qu'est prévu chaque fois un interrupteur (8-1, 8-2, 8.., 8-n) assurant la mise hors circuit du signal d'antenne de réception respectif, ou du signal de combinaison linéaire après le circuit de prélèvement de signal échantillon (5-1, 5-2, 5.., 5-n), lorsque le circuit de commande (20) envoie un signal à l'interrupteur (8-1, 8-2, 8..., 8-n).

14. Système d'antenne de réception selon la revendication 12 ou 13, caractérisé en ce que le circuit de commande (20) est relié chaque fois à un organe de rotation de phase (3-1, 3-2, 3..., 3-n) associé au signal d'antenne respectif, ou au signal de combinaison linéaire.

15. Système d'antenne de réception selon l'une des revendications 12 à 14, caractérisé en ce que le modulateur 12 imprime au signal échantillon une modulation sans porteuse.

16. Système d'antenne de réception selon la revendication 15, caractérisé en ce que le modulateur (12) est un modulateur à deux bandes latérales.

17. Système d'antenne de réception selon l'une des revendications 12 à 16, caractérisé en ce que les circuits de prélèvement de signal échantillon (5-1, 5-2, 5..., 5-n) respectif sont reliés à un commutateur (commutateur de signal échantillon) (7).

18. Système d'antenne de réception selon l'une des revendications 12 à 17, caractérisé en ce que le signal de commande du commutateur de signal échantillon (7) est produit par le circuit de commande (20).

19. Système d'antenne de réception selon l'une des revendications 12 à 18, caractérisé en ce que la sortie du modulateur (12) est reliée au moyen d'un commutateur d'alternance (18), alternativement directement ou par l'intermédiaire d'un décaleur de phase à 90° (15) et est reliée au conducteur de sortie du circuit sommateur.

20. Système d'antenne de réception selon l'une des revendications 12 à 19, caractérisé en ce que la sortie du circuit sommateur (10) est reliée à un raccordement du commutateur de signal échantillon (7).

21. Système d'antenne de réception selon l'une des revendications 12 à 20, caractérisé en ce que le circuit de commande (20) comprend un micro-processeur.
